(19) Europäisches Patentamt / European Patent Office / Office européen des brevets

(11) **EP 4 112 662 A1**

(12) **EUROPEAN PATENT APPLICATION**
published in accordance with Art. 153(4) EPC

(43) Date of publication:
**04.01.2023 Bulletin 2023/01**

(21) Application number: **21761521.0**

(22) Date of filing: **19.02.2021**

(51) International Patent Classification (IPC):
**C08F 287/00** (2006.01) **H01M 4/62** (2006.01)

(52) Cooperative Patent Classification (CPC):
**C08F 287/00; H01M 4/62;** Y02E 60/10

(86) International application number:
**PCT/JP2021/006480**

(87) International publication number:
**WO 2021/172229 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2020 JP 2020034360**

(71) Applicant: **Zeon Corporation**
**Tokyo 100-8246 (JP)**

(72) Inventor: **SONO Masayo**
**Tokyo 100-8246 (JP)**

(74) Representative: **Gerstberger, Gisela**
**Maiwald GmbH**
**Elisenhof**
**Elisenstraße 3**
**80335 München (DE)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, NON-AQUEOUS SECONDARY BATTERY ELECTRODE, AND NON-AQUEOUS SECONDARY BATTERY**

(57) A binder composition contains a particulate polymer including a graft portion and a backbone portion formed of a block copolymer including an aromatic vinyl monomer unit and an aliphatic conjugated diene monomer unit. An aromatic vinyl block region included in the block copolymer has a weight-average molecular weight of 15,000 or more, the block copolymer has a weight-average molecular weight of not less than 150,000 and not more than 500,000, and the graft portion constitutes a proportion of not less than 1.0 mass% and not more than 10.0 mass% relative to 100 mass% of the block copolymer.

## Description

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed by, for example, applying a slurry composition having an electrode active material, a binder-containing binder composition, and so forth dispersed in a dispersion medium (solvent) onto the current collector, and then drying the slurry composition.

A particulate polymer formed of a copolymer that includes an aromatic vinyl block region and a region including an aliphatic conjugated diene monomer unit may conventionally be used as a binder contained in a binder composition. For example, Patent Literature (PTL) 1 discloses a binder composition for a non-aqueous secondary battery electrode containing a particulate polymer A and a particulate polymer B, wherein the particulate polymer A is a copolymer that includes an aromatic vinyl block region and a region including an aliphatic conjugated diene monomer unit and the particulate polymer B is a random copolymer that includes an aliphatic conjugated diene monomer unit and an aromatic vinyl monomer unit. As another example, PTL 2 discloses a binder composition for a non-aqueous secondary battery containing water and a particulate polymer formed of a polymer that includes an aromatic vinyl block region and a region including an aliphatic conjugated diene monomer unit, wherein the surface acid content of the particulate polymer is within a specific range. As yet another example, PTL 3 discloses a binder composition for a non-aqueous secondary battery electrode containing a hindered phenol antioxidant and a particulate polymer formed of a graft polymer including a hydrophilic graft chain that is obtained through a graft polymerization reaction of not less than 1 part by mass and not more than 40 parts by mass, in total, of a hydrophilic monomer and/or macromonomer with 100 parts by mass of core particles containing a block copolymer that includes an aromatic vinyl block region and an isoprene block region and in which the proportional content of the isoprene block region is not less than 70 mass% and not more than 99 mass%.

CITATION LIST

Patent Literature

   PTL 1: WO2018/168420A1
   PTL 2: WO2019/107229A1
   PTL 3: WO2019/172281A1

SUMMARY

(Technical Problem)

There are instances in which an electrode including an electrode mixed material layer is dried under heating (hereinafter, also referred to as "thermal drying") at a high temperature of 100°C, for example, with the aim of sufficiently removing water before the electrode is used in assembly of a secondary battery. Studies carried out by the inventor have revealed that there is room for further improvement of the peel strength after thermal drying of an electrode produced using a binder composition of a conventional technique such as described above.

Moreover, in a production process of a secondary battery, a formed electrode may be cut to a desired size. In a situation in which adhesiveness of a binder contained in the electrode is insufficient, detachment from the electrode of a particulate material forming the electrode (hereinafter, also referred to as "dusting") may occur during this cutting, and this may also lead to reduction of battery performance in an operating environment of the battery. For this reason, it is necessary for a battery member to have a low tendency for dusting to occur (i.e., have high dusting resistance).

Accordingly, one object of the present disclosure is to provide a binder composition for a non-aqueous secondary battery electrode with which it is possible to form an electrode for a non-aqueous secondary battery having high dusting resistance and excellent peel strength after thermal drying.

Another object of the present disclosure is to provide a slurry composition for a non-aqueous secondary battery electrode with which it is possible to form an electrode for a non-aqueous secondary battery having high dusting resistance and excellent peel strength after thermal drying.

Another object of the present disclosure is to provide an electrode for a non-aqueous secondary battery having high dusting resistance and excellent peel strength after thermal drying.

Another object of the present disclosure is to provide a non-aqueous secondary battery including this electrode for a non-aqueous secondary battery.

(Solution to Problem)

The inventor conducted diligent investigation with the aim of solving the problems set forth above. The inventor made a new discovery that it is possible to form an electrode for a non-aqueous secondary battery having high dusting resistance and excellent peel strength after thermal drying by using a binder composition for a non-aqueous secondary battery electrode containing a particulate polymer that includes a graft portion and a backbone portion formed of a block copolymer that includes an aromatic vinyl monomer unit and an aliphatic conjugated diene monomer unit and in which the weight-average molecular weight of an aromatic vinyl block region in the block copolymer constituting the backbone portion, the weight-average molecular weight of the block copolymer itself, and the proportion constituted by the graft portion relative to the block copolymer are within specific ranges. In this manner, the inventor completed the present disclosure.

Specifically, the present disclosure aims to advantageously solve the problems set forth above, and a presently disclosed binder composition for a non-aqueous secondary battery electrode comprises a particulate polymer, wherein the particulate polymer includes: a backbone portion formed of a block copolymer including an aromatic vinyl monomer unit and an aliphatic conjugated diene monomer unit; and a graft portion, the block copolymer includes an aromatic vinyl block region formed of the aromatic vinyl monomer unit, the aromatic vinyl block region has a weight-average molecular weight of 15,000 or more, the block copolymer has a weight-average molecular weight of not less than 150,000 and not more than 500,000, and the graft portion constitutes a proportion of not less than 1.0 mass% and not more than 10.0 mass% when an amount of all repeating units forming the block copolymer is taken to be 100 mass%. By using a binder composition that contains a specific particulate polymer such as set forth above, it is possible to form an electrode for a non-aqueous secondary battery having high dusting resistance and excellent peel strength after thermal drying.

Note that a "monomer unit" of a polymer is a "repeating unit derived from that monomer that is included in a polymer obtained using the monomer". Moreover, the "weight-average molecular weight" in a polymer can be measured by a method described in the EXAMPLES section of the present specification. Furthermore, when a polymer is said to "include a block region formed of a monomer unit", this means that a section where only such monomer units are bonded in a row is present in the polymer. Also, the "weight-average molecular weight of a block region" or "weight-average molecular weight of a polymer" can be measured by a method described in the EXAMPLES section of the present specification. Moreover, the proportion constituted by a graft portion can be measured by a method described in the EXAMPLES section of the present specification.

In the presently disclosed binder composition for a non-aqueous secondary battery electrode, a value obtained by a formula: $\{G'(100) - G'(200)\}/G'(200)$, where $G'(100)$ is a value of storage modulus of the particulate polymer at 100°C and $G'(200)$ is a value of storage modulus of the particulate polymer at 200°C, is preferably 15.0 or less. When the particulate polymer satisfies the specific attribute value set forth above, dusting resistance and peel strength after thermal drying of an obtained electrode for a non-aqueous secondary battery can be further increased.

Note that the value of the storage modulus of the particulate polymer at each temperature can be measured by a method described in the EXAMPLES section of the present specification.

In the presently disclosed binder composition for a non-aqueous secondary battery electrode, the aromatic vinyl monomer unit preferably constitutes a proportion of not less than 20.0 mass% and not more than 50.0 mass% in the particulate polymer when an amount of all repeating units forming the particulate polymer is taken to be 100 mass%. When the proportion constituted by the aromatic vinyl monomer unit in the particulate polymer is within the specific range set forth above, dusting resistance and peel strength after thermal drying of an obtained electrode for a non-aqueous secondary battery can be further increased.

Note that the proportion constituted by a monomer unit in a polymer can be measured by $^1$H-NMR.

In the presently disclosed binder composition for a non-aqueous secondary battery electrode, the graft portion included in the particulate polymer preferably includes a carboxy group-containing monomer unit. When the graft portion included in the particulate polymer includes a carboxy group-containing monomer unit, the stability of a slurry composition produced using the binder composition can be increased.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. A slurry composition that contains an electrode active material and any one of the binder compositions set forth above in this manner can form an electrode for a non-aqueous secondary battery having high dusting resistance and excellent peel strength after thermal drying.

Furthermore, the present disclosure aims to advantageously solve the problems set forth above, and a presently disclosed electrode for a non-aqueous secondary battery comprises an electrode mixed material layer formed using the slurry composition set forth above. An electrode that includes an electrode mixed material layer formed using the slurry composition set forth above has high dusting resistance and excellent peel strength after thermal drying.

Also, the present disclosure aims to advantageously solve the problems set forth above, and a presently disclosed non-aqueous secondary battery comprises the electrode for a non-aqueous secondary battery set forth above. The presently disclosed non-aqueous secondary battery has excellent battery characteristics and high performance as a result of including the electrode for a non-aqueous secondary battery set forth above that has high dusting resistance and excellent peel strength after thermal drying.

(Advantageous Effect)

According to the present disclosure, it is possible to provide a binder composition for a non-aqueous secondary battery electrode with which it is possible to form an electrode for a non-aqueous secondary battery having high dusting resistance and excellent peel strength after thermal drying.

Moreover, according to the present disclosure, it is possible to provide a slurry composition for a non-aqueous secondary battery electrode with which it is possible to form an electrode for a non-aqueous secondary battery having high dusting resistance and excellent peel strength after thermal drying.

Furthermore, according to the present disclosure, it is possible to provide an electrode for a non-aqueous secondary battery having high dusting resistance and excellent peel strength after thermal drying.

Also, according to the present disclosure, it is possible to provide a non-aqueous secondary battery including this electrode for a non-aqueous secondary battery.

BRIEF DESCRIPTION OF THE DRAWING

In the accompanying drawing,

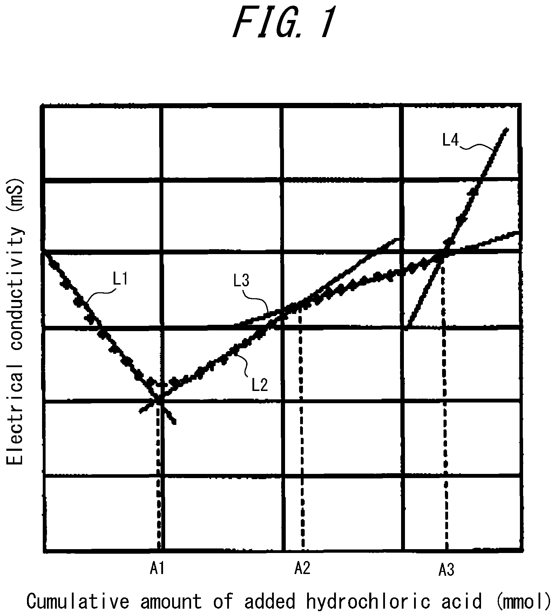

FIG. 1 is a graph in which electrical conductivity is plotted against cumulative amount of added hydrochloric acid in calculation of the surface acid content of a particulate polymer.

DETAILED DESCRIPTION

The following provides a detailed description of embodiments of the present disclosure.

The presently disclosed binder composition for a non-aqueous secondary battery electrode is for use in production of a non-aqueous secondary battery and can, for example, be used to produce the presently disclosed slurry composition for a non-aqueous secondary battery electrode. Moreover, the presently disclosed slurry composition for a non-aqueous secondary battery electrode can be used in formation of an electrode of a non-aqueous secondary battery, and, in particular, can particularly suitably be used in formation of a negative electrode of a non-aqueous secondary battery. Furthermore, the presently disclosed electrode for a non-aqueous secondary battery is formed from the presently disclosed slurry composition for a non-aqueous secondary battery electrode. Also, the presently disclosed non-aqueous secondary battery includes the presently disclosed electrode for a non-aqueous secondary battery.

(Binder composition for non-aqueous secondary battery electrode)

The presently disclosed binder composition contains a particulate polymer and may optionally further contain other components that can be compounded in electrodes of secondary batteries. In addition, the presently disclosed binder composition for a non-aqueous secondary battery electrode can further contain a solvent such as water. A feature of the presently disclosed binder composition is that it contains a particulate polymer including a graft portion and a backbone portion formed of a block copolymer that includes an aromatic vinyl monomer unit and an aliphatic conjugated diene monomer unit. In more detail, a feature is that, in this particulate polymer, the weight-average molecular weight of an aromatic vinyl block region included in the block copolymer is 15,000 or more, the weight-average molecular weight of the block copolymer is not less than 150,000 and not more than 500,000, and the proportion constituted by the graft portion relative to 100 mass% of the block copolymer is not less than 1.0 mass% and not more than 10.0 mass%.

A particulate polymer that satisfies the specific conditions set forth above can display high heat resistance, and thus this particulate polymer can display sufficiently high adhesive ability even after thermal drying. Consequently, an electrode that is formed using a slurry composition containing this particulate polymer has excellent peel strength and dusting resistance even after thermal drying.

Note that the term "thermal drying" as used in the present specification is also inclusive of thermal drying performed in a vacuum (reduced pressure) state (hereinafter, also referred to as "thermal vacuum drying"). An electrode that has been formed using the presently disclosed binder composition also has excellent peel strength after vacuum drying under heating at a high temperature of 100°C, for example (i.e., peel strength after thermal vacuum drying).

<Particulate polymer>

The particulate polymer is a component that functions as a binder and that, in an electrode mixed material layer formed using a slurry composition that contains the binder composition, holds components such as an electrode active material so that they do not detach from the electrode mixed material layer and enables adhesion of an electrode and a separator through the electrode mixed material layer. The particulate polymer is water-insoluble particles. Note that when particles are referred to as "water-insoluble" in the present disclosure, this means that when 0.5 g of polymer is dissolved in 100 g of water at a temperature of 25°C, insoluble content is 90 mass% or more.

«Structure and chemical composition»

The particulate polymer includes a backbone portion that is formed of a block copolymer including an aromatic vinyl monomer unit and an aliphatic conjugated diene monomer unit, and also includes a graft portion. More specifically, the particulate polymer is a graft copolymer having a structure in which a graft portion is bonded to a backbone portion formed of a block copolymer that includes a block region formed of aromatic vinyl monomer units (hereinafter, also referred to simply as the "aromatic vinyl block region") and a block region formed of aliphatic conjugated diene monomer units (hereinafter, also referred to simply as the "aliphatic conjugated diene block region"). The aromatic vinyl block region is formed of only aromatic vinyl monomer units. The aliphatic conjugated diene block region is preferably formed of only aliphatic conjugated diene monomer units, but, besides aliphatic conjugated diene monomer units, may include an alkylene structural unit.

Note that the block copolymer constituting the backbone portion may include other repeating units besides an aromatic vinyl monomer unit, an aliphatic conjugated diene monomer unit, and an alkylene structural unit.

The aromatic vinyl block region and the aliphatic conjugated diene block region are adjacent to each other in the block copolymer constituting the backbone portion. Moreover, the copolymer constituting the backbone portion may include one aromatic vinyl block region or a plurality of aromatic vinyl block regions. Likewise, the block copolymer constituting the backbone portion may include one aliphatic conjugated diene block region or a plurality of aliphatic conjugated diene block regions. Furthermore, the block copolymer constituting the backbone portion may include other regions besides the aromatic vinyl block region and the aliphatic conjugated diene block region.

The particulate polymer including the backbone portion that is formed of a block copolymer including an aromatic vinyl block region and an aliphatic conjugated diene block region has both rigidity and flexibility, and thus can impart high dusting resistance and excellent peel strength after thermal drying to an electrode formed using the binder composition.

[Aromatic vinyl block region]

The aromatic vinyl block region is a region that essentially only includes aromatic vinyl monomer units as repeating units as previously described.

A single aromatic vinyl block region may be formed of just one type of aromatic vinyl monomer unit or may be formed of a plurality of types of aromatic vinyl monomer units, but is preferably formed of just one type of aromatic vinyl monomer unit.

Moreover, a single aromatic vinyl block region may include a coupling moiety (i.e., aromatic vinyl monomer units forming a single aromatic vinyl block region may be linked via a coupling moiety).

In a case in which the block copolymer constituting the backbone portion includes a plurality of aromatic vinyl block regions, the types and proportions of aromatic vinyl monomer units forming these aromatic vinyl block regions may be the same or different for each of the aromatic vinyl block regions, but are preferably the same.

Examples of aromatic vinyl monomers that can form a constituent aromatic vinyl monomer unit of the aromatic vinyl block region in the block copolymer constituting the backbone portion include styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one of these aromatic vinyl monomers is used individually. Of these aromatic vinyl monomers, styrene is preferable.

The proportion constituted by aromatic vinyl monomer units in the particulate polymer when the amount of all repeating units forming the particulate polymer (total of repeating units in backbone portion and graft portion of particulate polymer) is taken to be 100 mass% is preferably 20.0 mass% or more, and more preferably 25.0 mass% or more, and is preferably 50.0 mass% or less, more preferably 40.0 mass% or less, and even more preferably 35.0 mass% or less. Note that the proportion constituted by aromatic vinyl monomer units in the particulate polymer is normally the same as the proportion constituted by the aromatic vinyl block region in the particulate polymer.

When the proportion constituted by aromatic vinyl monomer units in the particulate polymer is within any of the specific ranges set forth above, the rigidity of an electrode mixed material layer formed using the binder composition can be suitably improved, and the peel strength after thermal drying of an electrode can be further increased.

The weight-average molecular weight of the aromatic vinyl block region is preferably 15,000 or more, more preferably 25,000 or more, and even more preferably 27,000 or more, and is preferably 60,000 or less, and more preferably 40,000 or less. When the weight-average molecular weight of the aromatic vinyl block region is not less than any of the lower limits set forth above, the peel strength after thermal drying of an electrode formed using the binder composition can be further increased. On the other hand, when the weight-average molecular weight of the aromatic vinyl block region is not more than any of the upper limits set forth above, the rigidity of an electrode mixed material layer formed using the binder composition can be suitably improved, and the peel strength after thermal drying of an electrode can be further increased.

[Aliphatic conjugated diene block region]

The aliphatic conjugated diene block region is a region that essentially includes aliphatic conjugated diene monomer units as repeating units as previously described.

A single aliphatic conjugated diene block region may be formed of one type of aliphatic conjugated diene monomer unit or may be formed of a plurality of types of aliphatic conjugated diene monomer units.

Moreover, a single aliphatic conjugated diene block region may include a coupling moiety (i.e., aliphatic conjugated diene monomer units forming a single aliphatic conjugated diene block region may be linked via a coupling moiety).

In a case in which the block copolymer constituting the backbone portion includes a plurality of aliphatic conjugated diene block regions, the types and proportions of aliphatic conjugated diene monomer units forming these aliphatic conjugated diene block regions may be the same or different for each of the aliphatic conjugated diene block regions.

Conjugated diene compounds having a carbon number of 4 or more such as 1,3-butadiene, isoprene, 2,3-dimethyl-1,3-butadiene, and 1,3-pentadiene may be used for a constituent aliphatic conjugated diene monomer unit of the aliphatic conjugated diene block region in the block copolymer constituting the backbone portion. One of these conjugated diene compounds may be used individually, or two or more of these conjugated diene compounds may be used in combination. Of these conjugated diene compounds, 1,3-butadiene and isoprene are preferable from a viewpoint of further increasing the peel strength after thermal drying of an electrode, and 1,3-butadiene is particularly preferable.

Aliphatic conjugated diene monomer units forming the aliphatic conjugated diene block region in the block copolymer constituting the backbone portion may be cross-linked. In other words, aliphatic conjugated diene monomer units forming the aliphatic conjugated diene block region may include a structural unit obtained through cross-linking of an aliphatic conjugated diene. The inclusion of a structural unit obtained through cross-linking of an aliphatic conjugated diene in the aliphatic conjugated diene block region can increase the electrolyte solution injectability of an electrode formed using the binder composition.

A structural unit obtained through cross-linking of an aliphatic conjugated diene monomer unit can be introduced through cross-linking of the block copolymer constituting the backbone portion.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination. The cross-linking reaction may optionally be caused to proceed in the presence of a bridging ligand. The bridging ligand may be 3-mercapto-1,2-propanediol or the like, for example, without any specific limitations.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

The proportion constituted by aliphatic conjugated diene monomer units in the particulate polymer when the amount of all repeating units in the particulate polymer (total of repeating units in backbone portion and graft portion of particulate polymer) is taken to be 100 mass% is preferably 50.0 mass% or more, more preferably 55.0 mass% or more, and even more preferably 60.0 mass% or more, and is preferably 80.0 mass% or less, and more preferably 75.0 mass% or less. When the proportion constituted by aliphatic conjugated diene monomer units in the particulate polymer is within any of the specific ranges set forth above, the flexibility of an electrode mixed material layer formed using the binder composition can be suitably improved, and the peel strength after thermal drying of an electrode can be further increased. Note that the "aliphatic conjugated diene monomer units" referred to above are inclusive of structural units obtained through aliphatic conjugated diene cross-linking.

In addition, the aliphatic conjugated diene block region may include an alkylene structural unit. An alkylene structural unit is a repeating unit that is composed of only an alkylene structure represented by a general formula $-C_nH_{2n}-$ (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which an alkylene structural unit is introduced into the aliphatic conjugated diene block region. For example, a method in which a polymer that includes an aliphatic conjugated diene block region is hydrogenated so as to convert an aliphatic conjugated diene monomer unit included in the aliphatic conjugated diene block region to an alkylene structural unit may be adopted.

[Weight-average molecular weight of block copolymer]

The weight-average molecular weight of the block copolymer constituting the backbone portion is required to be 150,000 or more, and is preferably 180,000 or more. Moreover, the weight-average molecular weight of the block copolymer constituting the backbone portion is required to be 500,000 or less, and is preferably 400,000 or less, more preferably 300,000 or less, and even more preferably 250,000 or less. When the weight-average molecular weight of the block copolymer constituting the backbone portion is within any of the ranges set forth above, the dusting resistance and peel strength after thermal drying of an obtained electrode can be increased.

In addition, the weight-average molecular weight of the block copolymer and the weight-average molecular weight of the aromatic vinyl block region described above preferably satisfy the following relationship.

$0.140 \leq$ (Weight-average molecular weight of aromatic vinyl block region/Weight-average molecular weight of block copolymer) $\leq 0.220$

Moreover, the value of "weight-average molecular weight of aromatic vinyl block region/weight-average molecular weight of block copolymer" is more preferably 0.200 or less.

When the weight-average molecular weight of the block copolymer and the weight-average molecular weight of the aromatic vinyl block region satisfy the relationship set forth above, the dusting resistance and peel strength after thermal drying of an obtained electrode for a non-aqueous secondary battery can be further increased.

[Graft portion]

The particulate polymer includes a graft portion bonded to the backbone portion that is formed of a block copolymer including an aromatic vinyl monomer unit and an aliphatic conjugated diene monomer unit. More specifically, the particulate polymer has a structure in which a polymer constituting a graft portion is bonded to an aliphatic conjugated diene block region of a backbone portion that is formed of the above-described block copolymer including an aromatic vinyl block region and an aliphatic conjugated diene block region.

Examples of repeating units that may be included in the graft portion of the particulate polymer include an acidic group-containing monomer unit, a (meth)acrylic acid ester monomer unit, and a nitrile group-containing monomer unit such as an acrylonitrile unit or a methacrylonitrile unit.

Examples of acidic group-containing monomers that can form an acidic group-containing monomer unit include monomers having an acidic group such as carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Note that an acid anhydride that produces a carboxy group through hydrolysis can also be used as a carboxy group-containing monomer.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)allyl" is used to indicate "allyl" and/or "methallyl", and "(meth)acryloyl" is used to indicate "acryloyl" and/or "methacryloyl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

One of the various monomers described above that can be used to form a repeating unit included in the graft portion of the particulate polymer may be used individually, or two or more of these monomers may be used in combination. From a viewpoint of further increasing the stability of a slurry composition produced using the binder composition, it is preferable that an acidic group-containing monomer is used as a monomer for forming a repeating unit included in the graft portion of the particulate polymer, more preferable that a carboxy group-containing monomer is used, even more preferable that methacrylic acid, itaconic acid, or acrylic acid is used, and particularly preferable that methacrylic acid is used.

No specific limitations are placed on the method by which the graft portion is introduced to the block copolymer constituting the backbone portion. For example, the specific block copolymer described above may be produced and then this block copolymer may be used as a backbone portion in graft polymerization of an acidic group-containing monomer such as described above, or the like, by a known method to thereby obtain a graft copolymer having a structure in which a polymer of a graft portion is bonded to an aliphatic conjugated diene monomer unit of the block copolymer constituting the backbone portion.

The proportion constituted by monomer units forming the graft portion in the particulate polymer when the amount of all repeating units forming the backbone portion formed of the block copolymer in the particulate polymer is taken to be 100 mass% is required to be 1 mass% or more, and is preferably 1.5 mass% or more. Moreover, this proportion is required to be 10 mass% or less, and is preferably 5.0 mass% or less. When the proportion constituted by monomer units forming the graft portion is within any of the ranges set forth above, the dusting resistance and peel strength after thermal drying of an electrode formed using the binder composition can be increased. In particular, when the proportion constituted by monomer units forming the graft portion is not less than any of the lower limits set forth above, the stability of a slurry composition containing the binder composition can be increased.

«Volume-average particle diameter»

The volume-average particle diameter of the particulate polymer is preferably 0.10 μm or more, more preferably 0.18 μm or more, and even more preferably 0.25 μm or more, and is preferably 2.00 μm or less, more preferably 1.20 μm or less, and even more preferably 0.80 μm or less. By setting the volume-average particle diameter of the particulate polymer as not less than any of the lower limits set forth above, the electrolyte solution injectability of an electrode formed using a slurry composition that contains the binder composition can be increased. Moreover, by setting the volume-average particle diameter of the particulate polymer as not more than any of the upper limits set forth above, the specific surface area of the particulate polymer increases, adhesive ability that can be displayed by the particulate polymer increases, and, as a result, the dusting resistance and peel strength after thermal drying of an electrode formed using the binder composition can be further increased.

«Storage modulus of particulate polymer»

Values for the storage modulus of the particulate polymer measured at 100°C and 200°C preferably satisfy the following relationship.

$$\{G'(100) - G'(200)\}/G'(200) \leq 15.0$$

(In this relationship, G'(100) is the value of the storage modulus of the particulate polymer at 100°C and G'(200) is the value of the storage modulus of the particulate polymer at 200°C.)

Moreover, the value of {G'(100) - G'(200)}/G'(200) is preferably 1.0 or more, and more preferably 1.6 or more, and is more preferably 10.0 or less, and even more preferably 8.0 or less. When values for the storage modulus of the particulate polymer measured at 100°C and 200°C satisfy the relationship set forth above, the dusting resistance and peel strength after thermal drying of an obtained electrode for a non-aqueous secondary battery can be further increased.

Although the reason for this is not clear, it is presumed to be as follows. In the case of polymers used as conventional binder components, the value of the storage modulus thereof tends to decrease with increasing temperature. A higher rate of reduction of the storage modulus in accompaniment to increasing temperature (i.e., a value for the storage modulus measured under higher temperature conditions that is lower, to a greater degree, than a value for the storage modulus measured under lower temperature conditions) can be said to indicate that a polymer has lower heat resistance. In the present disclosure, it is thought that by adopting a particulate polymer with a chemical composition and structure designed such that values of the storage modulus measured at 100°C and 200°C satisfy the relationship described above, it has been possible to newly create a particulate polymer having remarkably excellent heat resistance.

Note that the storage modulus of the particulate polymer can be controlled through appropriate design of the chemical composition and structure of the particulate polymer. More specifically, a value of the storage modulus of the particulate polymer can be controlled to within a suitable range by suitably increasing the weight-average molecular weight of the aromatic vinyl block region, by setting the weight-average molecular weight of the block copolymer within a suitable range, and by controlling the proportion constituted by the graft portion relative to the overall block copolymer to within a suitable range.

The value of G'(200), which is the value of the storage modulus of the particulate polymer at 200°C, is preferably 0.1 MPa or more, more preferably 0.2 MPa or more, and even more preferably 1.0 MPa or less. Moreover, the value of G'(100), which is the value of the storage modulus of the particulate polymer at 100°C, is preferably 0.4 MPa or more, more preferably 0.8 MPa or more, and even more preferably 1.0 MPa or less. When the value of the storage modulus satisfies any of the ranges set forth above, the dusting resistance and peel strength after thermal drying of an obtained electrode for a non-aqueous secondary battery can be further increased.

«Production method of particulate polymer»

The above-described particulate polymer can be produced, for example, through a step of block polymerizing monomers such as an aromatic vinyl monomer and an aliphatic conjugated diene monomer described above in an organic solvent to obtain a solution of a block copolymer constituting a backbone portion (block copolymer solution production step), a step of adding water to the obtained block copolymer solution and performing emulsification to form particles of the block copolymer (emulsification step), and a step of performing graft polymerization with respect to the particles of the block copolymer to obtain a water dispersion of a particulate polymer that has a graft portion bonded to the block copolymer constituting the backbone portion (grafting step).

Note that the grafting step may be performed before the emulsification step in production of the particulate polymer. In other words, the particulate polymer may be produced by implementing a step of performing graft polymerization with respect to the block copolymer contained in the obtained block copolymer solution after the block copolymer solution production step to obtain a solution of a polymer having a graft portion bonded to the block copolymer constituting the backbone portion (grafting step) and subsequently implementing a step of adding water to the solution of that polymer and performing emulsification to form particles of the specific polymer and obtain a water dispersion of a particulate polymer (emulsification step).

In addition, other steps besides the above-described block copolymer solution production step, emulsification step, and grafting step may be included in production of the particulate polymer.

[Block copolymer solution production step]

No specific limitations are placed on the method of block copolymerization in the block copolymer solution production step. For example, a block copolymer can be produced by adding a second monomer component to a solution obtained through polymerization of a first monomer component differing from the second monomer component, polymerizing the second monomer component, and further repeating addition and polymerization of monomer components as necessary. The organic solvent that is used as a reaction solvent is not specifically limited and can be selected as appropriate depending on the types of monomers and so forth.

A block copolymer obtained through block copolymerization in this manner is preferably subjected to a coupling reaction using a coupling agent in advance of the subsequently described emulsification step. Through this coupling reaction, it is possible to cause bonding between the ends of diblock structures contained in the block copolymer via the coupling agent and to thereby convert these diblock structures to a triblock structure (i.e., reduce the amount of diblock structures), for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block copolymer.

Note that the block copolymer solution that is obtained after the block polymerization and optional coupling reaction described above may be subjected to the subsequently described emulsification step in that form or may be subjected to the emulsification step after the block copolymer has, as necessary, been hydrogenated as previously described.

[Emulsification step]

Although no specific limitations are placed on the method of emulsification in the emulsification step, a method in which phase-inversion emulsification is performed with respect to a preliminary mixture of the block copolymer solution obtained in the block copolymer solution production step described above and an aqueous solution of an emulsifier is preferable, for example. Note that the phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin (product name; produced by Gaulin), and a LAB 1000 (produced by SPX FLOW, Inc.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson). Conditions of the emulsification operation performed by the emulsifying/dispersing device (for example, processing temperature and processing time) may be set as appropriate so as to achieve a desired dispersion state without any specific limitations.

A known method may be used to remove organic solvent from the emulsion obtained after phase-inversion emulsification as necessary, for example, so as to yield a water dispersion of a block copolymer that has been formed into particles.

[Grafting step]

Although no specific limitations are placed on the method of graft polymerization in the grafting step, a method in which graft polymerization and cross-linking of the block copolymer are caused to proceed concurrently in the presence of a monomer that is to be graft polymerized using a radical initiator such as a redox initiator is preferable, for example. The radical initiator may be any of the redox initiators that were previously described in the "Structure and chemical composition" section as radical initiators that can be used to introduce a structural unit obtained through cross-linking of an aliphatic conjugated diene monomer unit.

The reaction conditions can be adjusted in accordance with the chemical composition of the block copolymer, the desired surface acid content, and so forth.

Through the grafting step, it is possible to obtain a water dispersion of a particulate polymer that includes a backbone portion formed of a block copolymer including an aromatic vinyl monomer unit and an aliphatic conjugated diene monomer unit and that also includes a graft portion. Note that in a case in which the grafting step is performed after the emulsification step (i.e., graft polymerization is performed with respect to a block copolymer that has been formed into particles), monomer units introduced by graft polymerization, such as acidic group-containing monomer units, tend to be present more abundantly toward the surface of the particulate polymer than at the center of the particulate polymer and are concentrated in a surface layer of the particulate polymer.

[Other steps]

Other steps besides the above-described block copolymer solution production step, emulsification step, and grafting step may be included in production of the particulate polymer.

Moreover, a purification step of purifying the water dispersion of the particulate polymer may be included as another step in production of the particulate polymer.

<Solvent>

The presently disclosed binder composition can further contain a solvent such as water. The solvent may be water, an aqueous solution that contains water, or a mixed solution of water and a small amount of an organic solvent. Of these examples, water is preferable as the solvent.

<Other components>

The presently disclosed binder composition can contain components other than those described above (i.e., other components). For example, the binder composition may contain a known particulate binder (styrene butadiene random copolymer, acrylic polymer, etc.) other than the particulate polymer described above.

The binder composition may also contain known additives. Examples of such known additives include anti-aging agents, antioxidants, defoamers, and dispersants. Examples of anti-aging agents that can be used include, but are not specifically limited to, a reaction product of p-cresol, cyclopentadiene, and isobutylene, and examples of antioxidants that can be used include, but are not specifically limited to, hindered phenol antioxidants such as 4-[[4,6-bis(octylthio)-1,3,5-triazin-2-yl]amino]-2,6-di-tert-butylphenol and phosphite antioxidants such as 3,9-bis(octadecyloxy)-2,4,8,10-tetraoxa-3,9-diphosphaspiro[5.5]undecane.

Note that one other component may be used individually, or two or more other components may be used in combination in a freely selected ratio.

<Production method of binder composition>

The presently disclosed binder composition can be produced by mixing the particulate polymer and other components that are optionally used in the presence of a solvent such as water without any specific limitations. Note that in a case in which a dispersion liquid of the particulate polymer is used in production of the binder composition, liquid contained in this dispersion liquid may be used as the solvent of the binder composition.

(Slurry composition for non-aqueous secondary battery electrode)

The presently disclosed slurry composition is a composition that is for use in formation of an electrode mixed material layer of an electrode. The presently disclosed slurry composition contains the binder composition set forth above and further contains an electrode active material. In other words, the presently disclosed slurry composition contains the previously described particulate polymer, an electrode active material, and the previously described solvent, and optionally further contains other components. By using the presently disclosed slurry composition, it is possible to form an electrode having excellent dusting resistance and peel strength after thermal drying. Moreover, by using an electrode that has excellent dusting resistance and peel strength after thermal drying in a secondary battery, it is possible to cause the secondary battery to display excellent battery characteristics.

<Binder composition>

The binder composition is the presently disclosed binder composition that contains the previously described particulate polymer.
No specific limitations are placed on the amount of the binder composition in the slurry composition. For example, the amount of the binder composition can be set as an amount such as to be not less than 0.5 parts by mass and not more than 15 parts by mass in terms of solid content per 100 parts by mass of the electrode active material.

<Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.
Specific examples of positive electrode active materials that may be used include, but are not specifically limited to, lithium-containing cobalt oxide ($LiCoO_2$), lithium manganate ($LiMn2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ (0 < x < 2), $Li[Ni_{0.17}Li_{0.2}Co_{0.07}Mn_{0.56}]O_2$, and $LiNi_{0.5}Mn_{1.5}O_4$.
Note that one of the positive electrode active materials described above may be used individually, or two or more of the positive electrode active materials described above may be used in combination.

[Negative electrode active material]

A negative electrode active material that is compounded in a negative electrode mixed material layer of a negative electrode in a lithium ion secondary battery may, for example, be a carbon-based negative electrode active material, a metal-based negative electrode active material, or a negative electrode active material that is a combination thereof.
A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.
A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal;

a simple substance of metal that can form a lithium alloy (for example, Ag, Al, Ba, Bi, Cu, Ga, Ge, In, Ni, P, Pb, Sb, Si, Sn, Sr, Zn, or Ti); and an oxide, sulfide, nitride, silicide, carbide, or phosphide of any of the preceding examples. Moreover, an oxide such as lithium titanate can be used.

Note that one of the negative electrode active materials described above may be used individually, or two or more of the negative electrode active materials described above may be used in combination.

<Other components>

Examples of other components that can be contained in the slurry composition include, but are not specifically limited to, conductive materials and the same components as other components that can be contained in the presently disclosed binder composition. Note that one other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that a solvent such as water used in production of the slurry composition is also inclusive of solvent that was contained in the binder composition. The mixing method is not specifically limited and can be mixing using a typically used stirrer or disperser.

(Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material and a component derived from a particulate polymer, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the particulate polymer is present in a particulate form in the slurry composition, the particulate polymer may have a particulate form or any other form in the electrode mixed material layer formed using the slurry composition.

The presently disclosed electrode for a non-aqueous secondary battery has excellent dusting resistance and peel strength after thermal drying as a result of the electrode mixed material layer being formed using the slurry composition for a non-aqueous secondary battery electrode set forth above. The presently disclosed electrode for a non-aqueous secondary battery also has excellent peel strength after thermal vacuum drying. By using the electrode having excellent dusting resistance and peel strength after thermal drying in a secondary battery, it is possible to cause the secondary battery to display excellent battery characteristics.

<Production of electrode for non-aqueous secondary battery>

The electrode mixed material layer of the presently disclosed electrode for a non-aqueous secondary battery can be formed by any of the following methods, for example.

(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. The density of the electrode mixed material layer after the aforementioned pressing process can be adjusted as appropriate within a range that yields the desired effects. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent battery characteristics as a result of being produced by using the electrode for a non-aqueous secondary battery set forth above, which has excellent dusting resistance and peel strength after thermal drying, as at least one of the positive electrode and the negative electrode.

Although the following describes, as one example, a case in which the secondary battery is a lithium ion secondary battery, the presently disclosed secondary battery is not limited to the following example.

<Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Separator>

The separator is not specifically limited and can be a separator such as described in JP2012-204303A, for example. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. The electrode for a non-aqueous secondary battery set forth above is used as at least one of the positive electrode and the negative electrode in the presently disclosed non-aqueous secondary battery, and is preferably used as the negative electrode. Prior to being used in production of the secondary battery, the electrode for a non-aqueous secondary battery set forth above may be subjected to drying under heating (thermal drying) at a high temperature of 100°C, for example, with the aim of sufficiently removing water. Moreover, prior to being used in production of the secondary battery, the electrode for a non-aqueous secondary battery set forth above may be subjected to vacuum drying under heating (thermal vacuum drying) at a high temperature of 100°C, for example, with the aim of further removing water. Furthermore, the presently disclosed non-aqueous secondary battery may be provided with an overcurrent preventing device such as a fuse or a PTC device; an expanded metal; or a lead plate, as necessary, in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Measurements and evaluations of various attributes in the examples and comparative examples were made by the following methods.

<Proportions of monomer units>

A binder composition produced in each example or comparative example was coagulated in methanol, and then the resultant coagulated material was vacuum dried at a temperature of 100°C for 5 hours to obtain a measurement sample. Next, the intensities of peaks attributed to monomer units included in the measurement sample were calculated by $^1$H-NMR. The proportion constituted by each monomer unit included in a particulate polymer was calculated based on the peak intensity attributed to that monomer unit as a proportion relative to the total peak intensity.

<Weight-average molecular weight of aromatic vinyl block region>

The molecular weight of an aromatic vinyl block region was calculated from the weight-average molecular weight of diblock copolymer contained in a particulate polymer and the proportion constituted by aromatic vinyl monomer units in the binder composition described above. The weight-average molecular weight of the copolymer contained in the particulate polymer was measured as a polystyrene-equivalent molecular weight by high-performance liquid chromatography (apparatus: HLC8220 (model no.) produced by Tosoh Corporation). Note that a particulate polymer produced in each example or comparative example was used as a measurement sample. The particulate polymer produced in each example or comparative example was coagulated in methanol, and then the resultant coagulated material was vacuum dried at a temperature of 100°C for 5 hours. Tetrahydrofuran-soluble content of this dried product was used as a high-performance liquid chromatography measurement sample. The measurement was performed using three linked columns (Shodex KF-404HQ (model no.) produced by Showa Denko K.K.; column temperature: 40°C; carrier: tetrahydrofuran at flow rate of 0.35 mL/min) and using a differential refractometer and a UV detector as detectors. Calibration of molecular weight was performed by 12 points for standard polystyrene (produced by Polymer Laboratories Ltd.; standard molecular weight: 500 to 3,000,000). The weight-average molecular weight of diblock structures was determined based on a peak attributed to the diblock structures in a chart obtained by the high-performance liquid chromatography. Note that in the obtained chart, two extremely sharp peaks having a dispersity of exceedingly close to 1 were detected, and the high molecular weight-side molecular weight of these two detected peaks was approximately double the low molecular weight-side molecular weight of these two detected peaks. Through this result, the used measurement sample was confirmed to contain diblock structures (styrene-butadiene) and triblock structures (styrene-butadiene-coupling moiety-butadiene-styrene).

The weight-average molecular weight of an aromatic vinyl block region was calculated using the following formula.

$$[\text{Weight-average molecular weight of aromatic vinyl block region}] =$$
$$[\text{Weight-average molecular weight of diblock structures}] \times [\text{Proportion (\%) of}$$
$$\text{aromatic vinyl monomer units in particulate polymer}] \div 100$$

Note that a value obtained by the method described in the "Proportions of monomer units" section was used as the "Proportion (%) of aromatic vinyl monomer units in particulate polymer" in the preceding formula.

Also note that, as necessary, a component of a peak can be removed and qualitatively analyzed by a combination of mass spectrometry and infrared spectroscopy, or the like, and can be further analyzed by $^1$H-NMR to analyze the chemical composition ratio of the component of the peak.

<Measurement of surface acid content of particulate polymer according to conductometric titration and conversion to proportional content of graft portion based on backbone portion formed of block copolymer>

A binder composition obtained in each example or comparative example was diluted with deionized water so as to adjust the solid content concentration to 3%. The adjusted sample was subsequently adjusted to pH 12.0 with 3% sodium hydroxide aqueous solution. The pH adjusted sample, in an amount of 1.5 g in terms of solid content, was collected in a 100 mL beaker, and then 3 g of an aqueous solution of EMULGEN 120 (produced by Kao Corporation) diluted to 0.2% and 1 g of an aqueous solution of SM5512 (produced by Dow Corning Toray Co., Ltd.) diluted to 1% were added thereto. These materials were uniformly stirred by a stirrer while 0.1 N hydrochloric acid aqueous solution was added thereto at a rate of 0.5 mL/30 s and while electrical conductivity was measured at intervals of 30 seconds.

The obtained electrical conductivity data was plotted on a graph with electrical conductivity on a vertical axis (Y coordinate axis) and cumulative amount of added hydrochloric acid on a horizontal axis (X coordinate axis). In this manner, a hydrochloric acid amount-electrical conductivity curve with three inflection points such as illustrated in FIG. 1 was obtained. The X coordinates of the three inflection points and the end point of hydrochloric acid addition were denoted as PI, P2, P3, and P4 in order from the smallest value. Linear approximations L1, L2, L3, and L4 were determined by the least squares method for data in 4 sections corresponding to X coordinates of: zero to coordinate P1; coordinate P1 to coordinate P2; coordinate P2 to coordinate P3; and coordinate P3 to coordinate P4. An X coordinate of an intersection point of the linear approximation L1 and the linear approximation L2 was taken to be A1, an X coordinate of an intersection point of the linear approximation L2 and the linear approximation L3 was taken to be A2, and an X coordinate of an intersection point of the linear approximation L3 and the linear approximation L4 was taken to be A3.

The surface acid content of the particulate polymer (amount of acid per 1 g of solid content of binder composition) according to conductometric titration was determined as a hydrochloric acid-equivalent value (mmol/g) from the following formula (a).

$$(\text{a}) \ \text{Surface acid content of particulate polymer} = (A2 - A1)/1.5 \ \text{g}$$

Based on the value obtained by the preceding formula, measurement results of $^1$H-NMR described above, and so forth, the proportion (mass%) constituted by a graft portion was calculated for when all repeating units forming a block copolymer constituting a backbone portion were taken to be 100 mass%. The results are shown in Table 1.

<Dynamic viscoelasticity characteristics>

A binder composition obtained in each example or comparative example was cast into a petri dish and was dried at room temperature (25°C) to obtain a binder film. This binder film was vacuum dried at room temperature for 12 hours to obtain a measurement sample. Measurement was performed by a viscoelasticity measurement device (Production RPA produced by Alpha Technologies) with a frequency of 1 Hz and a strain of 10% while increasing the temperature in stages from 30°C to 200°C.

Through this measurement, a value G'(100) of the storage modulus of a particulate polymer at 100°C and a value G'(200) of the storage modulus of the particulate polymer at 200°C were measured, and a value of {G'(100) - G'(200)}/G'(200) was calculated. The results are shown in Table 1.

<Stability of slurry composition>

A solution prior to addition of a binder composition in production of a slurry composition in each example or comparative example was collected, and the viscosity M0 (mPa·s) thereof was measured using a B-type viscometer (produced by Toki Sangyo Co., Ltd.; product name: TV-25) under conditions of a measurement temperature of 25°C, a No. 4 measurement rotor, and a rotor speed of 60 rpm.

In addition, a slurry composition obtained after addition of a binder composition was collected, was loaded into a vessel of 5.5 cm in diameter and 8.0 cm in height, and was stirred at a rotation speed of 3,000 rpm for 10 minutes using a TK Homo Disper (produced by PRIMIX Corporation; disper blade diameter: 40 mm). The viscosity M1 (mPa·s) of the slurry composition after stirring was measured in the same manner as the viscosity M0 of the solution prior to addition of a binder composition.

Next, the viscosity change rate $\Delta$M (= {(M1 - M0)/M0} $\times$ 100%) was calculated and was evaluated in accordance with the following standard. A smaller viscosity change rate $\Delta$M indicates that the slurry composition has higher viscosity stability and that the slurry composition has better stability.

A: Viscosity change rate $\Delta$M of less than 10%
B: Viscosity change rate $\Delta$M of not less than 10% and less than 20%
C: Viscosity change rate $\Delta$M of not less than 20% and less than 50%
D: Viscosity change rate $\Delta$M of 50% or more

<Peel strength after thermal vacuum drying of electrode>

A negative electrode produced in each example or comparative example was cut out as a rectangle of 100 mm in length and 10 mm in width to obtain a test specimen. The test specimen was placed inside a vacuum drying oven (produced by Yamato Scientific Co., Ltd.; model: DP23) and was vacuum dried under heating at 100°C for 10 hours. The test specimen that had undergone thermal vacuum drying was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. Three measurements were made in this manner, an average value thereof was determined, and the average value was taken to be the peel strength after thermal vacuum drying of the electrode and was evaluated in accordance with the following standard.

A: 25 N/m or more
B: Not less than 20 N/m and less than 25 N/m
C: Not less than 15 N/m and less than 20 N/m
D: Less than 15 N/m

<Dusting resistance>

A negative electrode produced in each example or comparative example was cut out as a square of 10 cm $\times$ 10 cm to obtain a sample. The mass (Y0) of this sample was measured. The sample was subsequently punched at 5 locations using a circular punching machine of 16 mm in diameter. An air brush was applied to both the circular samples that had been punched out and the sample having circular holes opened therein, the total mass (Y1) of these samples was measured, and then a dusting ratio (ratio of mass after punching relative to mass before punching) was calculated based on the following formula. A larger value indicates less cracking and peeling of an edge of the negative electrode.

$$\text{Dusting ratio} = (Y1/Y0) \times 100 \ (\%)$$

A: 99.98% or more
B: Not less than 99.97% and less than 99.98%
C: Not less than 99.96% and less than 99.97%
D: Less than 99.96%

(Example 1)

<Production of particulate polymer>

«Block copolymer cyclohexane solution production step»

A pressure-resistant reactor was charged with 233.3 kg of cyclohexane, 31.03 mmol of N,N,N',N'-tetramethylethylenediamine (hereinafter, referred to as "TMEDA"), and 30.0 kg of styrene as an aromatic vinyl monomer. These materials were stirred at 40°C while 1034.5 mmol of n-butyllithium as a polymerization initiator was added thereto, and then 1 hour of polymerization was performed under heating at 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%.

Next, 460.3 mmol of dichlorodimethylsilane as a coupling agent was added into the pressure-resistant reactor and a coupling reaction was carried out for 2 hours to form a styrene-butadiene coupled block copolymer. Thereafter, 2069.0 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block copolymer.

The collected dried product was dissolved in cyclohexane to produce a block copolymer cyclohexane solution having a block copolymer concentration of 10.0%.

«Emulsification step»

Sodium alkylbenzene sulfonate was dissolved in deionized water to produce a 0.3% aqueous solution.

After loading 1,000 g of the obtained block copolymer solution and 1,000 g of the obtained aqueous solution into a tank, preliminary mixing thereof was performed by stirring to obtain a preliminary mixture. Next, the preliminary mixture was transferred from the tank to a high-pressure emulsifying/dispersing device "LAB 1000" (produced by SPX FLOW, Inc.) using a metering pump and was circulated (number of passes: 5) so as to obtain an emulsion in which the preliminary mixture had undergone phase-inversion emulsification.

Next, cyclohexane in the obtained emulsion was evaporated under reduced pressure in a rotary evaporator.

Finally, the upper layer portion was filtered through a 100-mesh screen to obtain a water dispersion (block copolymer latex) containing a block copolymer that had been formed into particles.

«Graft polymerization and cross-linking step»

Distilled water was added to dilute the obtained block copolymer latex such that the amount of water was 800 parts relative to 100 parts (in terms of solid content) of the particles of the block copolymer. The diluted block copolymer latex was loaded into a stirrer-equipped polymerization reactor that had undergone nitrogen purging and was heated to a temperature of 30°C under stirring. In addition, a separate vessel was used to produce a diluted methacrylic acid solution by mixing 10 parts of methacrylic acid as an acidic group-containing monomer and 90 parts of distilled water. The diluted methacrylic acid solution was added over 30 minutes into the polymerization reactor that had been heated to 30°C so as to add 10 parts of methacrylic acid relative to 100 parts of the block copolymer. Thereafter, 1.0 parts of 3-mercapto-1,2-propanediol as a bridging ligand was added relative to 100 parts (in terms of solid content) of the block copolymer.

A separate vessel was used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at 30°C for 1 hour and then at 70°C for 2 hours. In this manner, cross-linking of the block copolymer was performed, and methacrylic acid was graft polymerized with the block copolymer that had been formed into particles to yield a water dispersion of a particulate polymer. The polymerization conversion rate was 99%.

«Production of binder composition»

The water dispersion of the particulate polymer obtained as described above was adjusted to pH 8.0 through addition of 5% sodium hydroxide aqueous solution, and then 0.5 parts of an anti-aging agent dispersion that was a reaction product of p-cresol, cyclopentadiene, and isobutylene was added relative to 100 parts (in terms of solid content) of the block copolymer.

<Production of slurry composition for non-aqueous secondary battery negative electrode>

A planetary mixer was charged with 97 parts of natural graphite (theoretical capacity: 360 mAh/g) as a negative electrode active material and 1 part (in terms of solid content) of carboxymethyl cellulose (CMC) as a thickener. These materials were diluted to a solid content concentration of 60% with deionized water and were subsequently kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. Deionized water was added to adjust the viscosity (measured by B-type viscometer; temperature: 25°C; rotor speed: 60 rpm) to $3,000 \pm 500$ mPa·s and thereby produce a slurry composition for a negative electrode.

<Formation of negative electrode>

The slurry composition for a negative electrode was applied onto the surface of electrolytic copper foil of 15 $\mu$m in thickness serving as a current collector by a comma coater such as to have a coating weight of $11 \pm 0.5$ mg/cm$^2$. The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.
The negative electrode mixed material layer-side of the produced negative electrode web was subsequently roll pressed in an environment having a temperature of $25 \pm 3$°C to obtain a negative electrode having a negative electrode mixed material layer density of 1.60 g/cm$^3$.

<Formation of positive electrode>

A planetary mixer was charged with 97 parts of an active material NMC532 (LiNi$_{5/10}$Co$_{2/10}$Mn$_{3/10}$O$_2$) based on a lithium complex oxide of Co-Ni-Mn as a positive electrode active material, 1 part of acetylene black (produced by Denka Company Limited; product name: HS-100) as a conductive material, and 2 parts (in terms of solid content) of polyvinylidene fluoride (produced by Kureha Corporation; product name: #7208) as a binder, and was used to mix these materials. In addition, N-methyl-2-pyrrolidone (NMP) was gradually added as an organic solvent and was mixed therewith by stirring at a temperature of $25 \pm 3$°C and a rotation speed of 25 rpm to yield a slurry composition for a positive electrode having a viscosity (measured by B-type viscometer; temperature: $25 \pm 3$°C; rotor: M4; rotor speed: 60 rpm) of 3,600 mPa·s.
The obtained slurry composition for a positive electrode was applied onto aluminum foil of 20 $\mu$m in thickness serving as a current collector by a comma coater such as to have a coating weight of $20 \pm 0.5$ mg/cm$^2$. The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.
The positive electrode mixed material layer-side of the produced positive electrode web was subsequently roll pressed in an environment having a temperature of $25 \pm 3$°C to obtain a positive electrode having a positive electrode mixed material layer density of 3.20 g/cm$^3$.

<Preparation of separator>

A separator made of a single layer of polypropylene (produced by Celgard, LLC.; product name: Celgard 2500)

EP 4 112 662 A1

was prepared as a separator composed of a separator substrate.

<Production of lithium ion secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, an $LiPF_6$ solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery.

Various measurements and evaluations were performed by the previously described methods with respect to the particulate polymer, binder composition, slurry composition, electrode (negative electrode), secondary battery, and so forth obtained as described above. The results are shown in Table 1.

(Examples 2 and 3)

Various operations, measurements, and evaluations were performed in the same way as in Example 1 with the exception that in production of the particulate polymer, the amount of methacrylic acid that was added in graft polymerization was adjusted such that the proportion constituted by the graft portion relative to 100 mass% of the block copolymer was a value indicated in Table 1. The results are shown in Table 1.

(Example 4)

Various operations, measurements, and evaluations were performed in the same way as in Example 1 with the exception that in production of the particulate polymer, the additive amount of TMEDA was changed to 16.4 mmol, the additive amount of n-butyllithium was changed to 545.5 mmol, the additive amount of dichlorodimethylsilane was changed to 46.4 mmol, and the additive amount of methanol was changed to 1090.9 mmol. The results are shown in Table 1.

(Example 5)

Various operations, measurements, and evaluations were performed in the same way as in Example 1 with the exception that in production of the particulate polymer, the additive amount of TMEDA was changed to 36.0 mmol, the additive amount of n-butyllithium was changed to 1200.0 mmol, the additive amount of dichlorodimethylsilane was changed to 540.0 mmol, the additive amount of methanol was changed to 2400.0 mmol, and isoprene was used instead of 1,3-butadiene as an aliphatic conjugated diene monomer. The results are shown in Table 1.

(Comparative Example 1)

A pressure-resistant reactor was charged with 233.3 kg of cyclohexane, 60.0 mmol of N,N,N',N'-tetramethylethylenediamine (hereinafter, referred to as "TMEDA"), and 14.0 kg of styrene as an aromatic vinyl monomer. These materials were stirred at 40°C while 2000.0 mmol of n-butyllithium as a polymerization initiator was added thereto, and then 1 hour of polymerization was performed under heating at 50°C. The polymerization conversion rate of styrene was 100%. Next, 86.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%. Next, 820.0 mmol of dichlorodimethylsilane as a coupling agent was added into the pressure-resistant reactor and a coupling reaction was carried out for 2 hours to form a styrene-butadiene coupled block copolymer. Thereafter, 4000.0 mmol of methanol was added to the reaction liquid and was thoroughly mixed therewith to deactivate active ends.

For subsequent steps, various operations, measurements, and evaluations were performed in the same way as in Example 1. The results are shown in Table 1.

(Comparative Example 2)

A pressure-resistant reactor was charged with 233.3 kg of cyclohexane, 52.2 mmol of N,N,N',N'-tetramethylethylenediamine (hereinafter, referred to as "TMEDA"), and 40.0 kg of styrene as an aromatic vinyl monomer. These materials were stirred at 40°C while 1739.1 mmol of n-butyllithium as a polymerization initiator was added thereto, and then 1 hour of polymerization was performed under heating at 50°C. The polymerization conversion rate of styrene was 100%. Next, 60.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%. Next, 695.7 mmol of dichlorodimethylsilane as a coupling agent was added into the pressure-resistant reactor and a coupling reaction was carried out for 2 hours to form a styrene-butadiene coupled block copolymer. Thereafter, 3478.3 mmol of methanol was added to the reaction liquid and was thoroughly mixed therewith to deactivate active ends.

For subsequent steps, various operations, measurements, and evaluations were performed in the same way as in Example 1. The results are shown in Table 1.

(Comparative Example 3)

A pressure-resistant reactor was charged with 233.3 kg of cyclohexane, 46.9 mmol of N,N,N',N'-tetramethylethylenediamine (hereinafter, referred to as "TMEDA"), and 25.0 kg of styrene as an aromatic vinyl monomer. These materials were stirred at 40°C while 1562.5 mmol of n-butyllithium as a polymerization initiator was added thereto, and then 1 hour of polymerization was performed under heating at 50°C. The polymerization conversion rate of styrene was 100%. Next, 75.0 kg of isoprene as an aliphatic conjugated diene monomer was continuously added into the pressure-resistant reactor over 1 hour while performing temperature control to maintain a temperature of 50°C to 60°C. The polymerization reaction was continued for 1 hour more after addition of the isoprene was complete. The polymerization conversion rate of isoprene was 100%. Next, 585.9 mmol of dichlorodimethylsilane as a coupling agent was added into the pressure-resistant reactor and a coupling reaction was carried out for 2 hours to form a styrene-isoprene coupled block copolymer. Thereafter, 3125.0 mmol of methanol was added to the reaction liquid and was thoroughly mixed therewith to deactivate active ends.

For subsequent steps, various operations, measurements, and evaluations were performed in the same way as in Example 1. The results are shown in Table 1.

(Comparative Examples 4 and 5)

Various operations, measurements, and evaluations were performed in the same way as in Example 1 with the exception that in production of the particulate polymer, the amount of methacrylic acid added in graft polymerization was adjusted such that the proportion constituted by the graft portion relative to 100 mass% of the block copolymer was a value indicated in Table 1. The results are shown in Table 1.

In Table 1:

"ST" indicates styrene unit;
"BD" indicates 1,3-butadiene unit;
"IP" indicates isoprene unit; and
"MAA" indicates methacrylic acid unit.

Table 1

| | | | | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|---|---|---|
| Binder composition | Particulate polymer | Block copolymer | Aromatic vinyl monomer unit | Type | | ST | ST | ST | ST | ST | ST | ST | ST | ST | ST |
| | | | | Proportion [mass%] | | 30 | 30 | 30 | 30 | 30 | 14 | 40 | 25 | 30 | 30 |
| | | | Weight-average molecular weight $Mw^A$ of aromatic vinyl block region [-] | | | 29000 | 29000 | 29000 | 55000 | 25000 | 7000 | 23000 | 16000 | 29000 | 29000 |
| | | | Aliphatic conjugated diene monomer unit | Type | | BD | BD | BD | BD | IP | BD | BD | IP | BD | BD |
| | | | | Proportion [mass%] | | 70 | 70 | 70 | 70 | 70 | 86 | 60 | 75 | 70 | 70 |
| | | | Weight-average molecular weight $Mw^B$ of block copolymer [-] | | | 190000 | 190000 | 190000 | 300000 | 200000 | 140000 | 98000 | 120000 | 190000 | 190000 |
| | | | $Mw^A/Mw^B$ [-] | | | 0.153 | 0.153 | 0.153 | 0.183 | 0.125 | 0.050 | 0.235 | 0.133 | 0.153 | 0.153 |
| | | Graft | Type | | | MAA | MAA | MAA | MAA | MAA | MAA | MAA | MAA | MAA | MAA |
| | | | Surface acid content of particulate polymer according to conductometric titration [mmol/g] | | | 0.30 | 0.16 | 0.56 | 0.30 | 0.30 | 0.30 | 0.30 | 0.30 | 0.06 | 0 |
| | | | Proportion [mass%] (based on 100 mass% of block copolymer) | | | 2.6 | 1.4 | 5.1 | 2.6 | 2.6 | 2.6 | 2.6 | 2.6 | 0.5 | 0 |
| | | Storage modulus: [G'(100) - G'(200)]/G'(200) | | | | 2.2 | 3.0 | 1.5 | 1.9 | 2.8 | 20.5 | 25.0 | 16.0 | 3.5 | 4.4 |
| | Solvent | | | | | Water | Water | Water | Water | Water | Water | Water | Water | Water | Water |

EP 4 112 662 A1

(continued)

| Evaluation | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|
| | Stability of slurry composition | A | B | A | B | B | B | B | B | c | D |
| | Peel strength after thermal vacuum drying of electrode | A | A | B | B | B | D | c | D | c | D |
| | Dusting resistance | A | A | B | B | B | D | c | D | c | D |

It can be seen from Table 1 that it was possible to form an electrode for a non-aqueous secondary battery having high dusting resistance and excellent peel strength after thermal drying using the binder compositions of Examples 1 to 5, which each contained a particulate polymer for which the weight-average molecular weight of an aromatic vinyl block region was 15,000 or more, the weight-average molecular weight of a block copolymer was not less than 150,000 and not more than 500,000, and the proportion constituted by a graft portion relative to 100 mass% of the block copolymer was not less than 1.0 mass% and not more than 10.0 mass%.

In contrast, it can be seen that it was not possible to form an electrode for a non-aqueous secondary battery having high dusting resistance and excellent peel strength after thermal drying in Comparative Example 1 in which the above-described particulate polymer was replaced with a particulate polymer for which the weight-average molecular weight of an aromatic vinyl block region was less than 15,000, Comparative Examples 2 and 3 in which the above-described particulate polymer was replaced with a particulate polymer for which the weight-average molecular weight of a block copolymer was less than 150,000, and Comparative Examples 4 and 5 in which the above-described particulate polymer was replaced with a particulate polymer for which the proportion constituted by a graft portion relative to 100 mass% of a block copolymer was less than 1.0 mass%.

INDUSTRIAL APPLICABILITY

According to the present disclosure, it is possible to provide a binder composition for a non-aqueous secondary battery electrode with which it is possible to form an electrode for a non-aqueous secondary battery having high dusting resistance and excellent peel strength after thermal drying.

Moreover, according to the present disclosure, it is possible to provide a slurry composition for a non-aqueous secondary battery electrode with which it is possible to form an electrode for a non-aqueous secondary battery having high dusting resistance and excellent peel strength after thermal drying.

Furthermore, according to the present disclosure, it is possible to provide an electrode for a non-aqueous secondary battery having high dusting resistance and excellent peel strength after thermal drying.

Also, according to the present disclosure, it is possible to provide a non-aqueous secondary battery including this electrode for a non-aqueous secondary battery.

## Claims

1. A binder composition for a non-aqueous secondary battery electrode comprising a particulate polymer, wherein

   the particulate polymer includes: a backbone portion formed of a block copolymer including an aromatic vinyl monomer unit and an aliphatic conjugated diene monomer unit; and a graft portion,
   the block copolymer includes an aromatic vinyl block region formed of the aromatic vinyl monomer unit,
   the aromatic vinyl block region has a weight-average molecular weight of 15,000 or more,
   the block copolymer has a weight-average molecular weight of not less than 150,000 and not more than 500,000, and
   the graft portion constitutes a proportion of not less than 1.0 mass% and not more than 10.0 mass% when an amount of all repeating units forming the block copolymer is taken to be 100 mass%.

2. The binder composition for a non-aqueous secondary battery electrode according to claim 1, wherein a value obtained by a formula: $\{G'(100) - G'(200)\}/G'(200)$, where $G'(100)$ is a value of storage modulus of the particulate polymer at 100°C and $G'(200)$ is a value of storage modulus of the particulate polymer at 200°C, is 15.0 or less.

3. The binder composition for a non-aqueous secondary battery electrode according to claim 1 or 2, wherein the aromatic vinyl monomer unit constitutes a proportion of not less than 20.0 mass% and not more than 50.0 mass% in the particulate polymer when an amount of all repeating units forming the particulate polymer is taken to be 100 mass%.

4. The binder composition for a non-aqueous secondary battery electrode according to any one of claims 1 to 3, wherein the graft portion of the particulate polymer includes a carboxy group-containing monomer unit.

5. A slurry composition for a non-aqueous secondary battery electrode comprising: an electrode active material; and the binder composition for a non-aqueous secondary battery electrode according to any one of claims 1 to 4.

6. An electrode for a non-aqueous secondary battery comprising an electrode mixed material layer formed using the slurry composition for a non-aqueous secondary battery electrode according to claim 5.

7. A non-aqueous secondary battery comprising the electrode for a non-aqueous secondary battery according to claim 6.

# FIG. 1

Electrical conductivity (mS)

L4

L1

L3

L2

A1          A2          A3

Cumulative amount of added hydrochloric acid (mmol)

**INTERNATIONAL SEARCH REPORT**

| | International application No. |
|---|---|
| | PCT/JP2021/006480 |

**A. CLASSIFICATION OF SUBJECT MATTER**
C08F 287/00(2006.01)i; H01M 4/62(2006.01)i
FI: H01M4/62 Z; C08F287/00

According to International Patent Classification (IPC) or to both national classification and IPC

**B. FIELDS SEARCHED**

Minimum documentation searched (classification system followed by classification symbols)
C08F287/00; H01M4/62

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/039560 A1 (ZEON CORP.) 28 February 2019 (2019-02-28) claims, examples | 1–7 |
| X | JP 2014-11019 A (ZEON CORP.) 20 January 2014 (2014-01-20) claims, paragraphs [0048], [0051], examples | 1–7 |
| Y | WO 2019/044166 A1 (ZEON CORP.) 07 March 2019 (2019-03-07) claims, examples | 1–2, 4–7 |
| Y | WO 2019/172281 A1 (ZEON CORP.) 12 September 2019 (2019-09-12) claims, paragraph [0024], examples | 1–2, 4–7 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 April 2021 (28.04.2021) | 18 May 2021 (18.05.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

Information on patent family members

International application No.

PCT/JP2021/006480

| Patent Documents referred in the Report | Publication Date | Patent Family | Publication Date |
|---|---|---|---|
| WO 2019/039560 A1 | 28 Feb. 2019 | EP 3675255 A1 claims, examples CN 111066185 A KR 10-2020-0042898 A | |
| JP 2014-11019 A | 20 Jan. 2014 | (Family: none) | |
| WO 2019/044166 A1 | 07 Mar. 2019 | EP 3678238 A1 claims, examples CN 111033836 A KR 10-2020-0042905 A | |
| WO 2019/172281 A1 | 12 Sep. 2019 | (Family: none) | |

Form PCT/ISA/210 (patent family annex) (January 2015)

**EP 4 112 662 A1**

**REFERENCES CITED IN THE DESCRIPTION**

**Patent documents cited in the description**

- WO 2018168420 A1
- WO 2019107229 A1
- WO 2019172281 A1
- JP 2012204303 A